# EUROPEAN PATENT APPLICATION

(11) **EP 3 799 357 A1**
(43) Date of publication of application: **31.03.2021**
(21) Application number: 20199095.9
(22) Date of filing: 29.09.2020
(51) Int. Cl.: H04L 12/24, H04L 12/26

(54) **METHOD FOR AUTOMATICALLY EXITING TRIAL RUN, DEVICE, AND SYSTEM**

(30) Priority: 30.09.2019 CN 201910943992
(71) Applicant: HUAWEI TECHNOLOGIES CO., LTD., Shenzhen, Guangdong 518129 (CN)
(72) Inventor: WANG, Lu, Shenzhen, Guangdong 518129, P.R. (CN)
(74) Representative: Gill Jennings & Every LLP

(57) **Abstract**

This application provides a method for automatically exiting trial run, a device, and a system. In a manner in which a packet that is sent by a first device running a network protocol client to a second device running a network protocol server and that is used to request trial run carries a condition set used to indicate the second device to exit trial run, the second device can automatically determine, in a process of performing trial run, whether the condition set is met, and automatically exit trial run when the condition set is met. This reduces a problem that in the trial run process of the second device, operation and maintenance personnel need to repeatedly confirm whether the second device needs to exit trial run, and a processing process is relatively complex.

## Description

### TECHNICAL FIELD

This application relates to the communications field, and relates to a method for automatically exiting trial run, a device, and a system.

### BACKGROUND

Currently, network protocols used to manage a network device may include a simple network management protocol (SNMP) and a network configuration protocol (NETCONF). In addition, the device may be managed in a manner of using a remote login network protocol (Telnet) or a secure shell (SSH) protocol to carry a command line. Generally, these network protocols are used to manage the network device in a client/server mode. Operation and maintenance personnel may use a device running a network protocol client to manage a device running a network protocol server.

In some network protocols, such as the NETCONF, the Telnet, or the SSH, a device running a server supports to modify a configuration of the device in a trial run manner, to be specific, first trial run a candidate configuration, and determine, based on a trial run status, whether to commit the candidate configuration as a running configuration.

After the device running the server starts trial run, in some cases, for example, the device running the server is out of management of a device running a client due to trial run, or after the operation and maintenance personnel find that some configurations in trial run are incorrect, trial run needs to be exited, to restore the running configuration to a status before trial run.

Generally, after the device running the server starts trial run, the operation and maintenance personnel may use the device running the client to repeatedly deliver a command to the device running the server and obtain a result, and further analyze, based on the result, whether it is necessary to exit trial run. Consequently, the device running the server cannot exit trial run in a timely manner, and the operation and maintenance personnel need to repeatedly make confirmation. This results in a relatively complex processing process.

### SUMMARY

This application provides a method for automatically exiting trial run, a device, and a system, to resolve a problem that a processing process of exiting trial run by a device running a server is relatively complex.

According to a first aspect, a method for automatically exiting trial run is provided. The method is applied to a first device, and the first device runs a network protocol client. The method includes: obtaining, by the first device, a condition set, where the condition set includes at least one condition, and the at least one condition is a condition used to indicate a second device running a network protocol server to exit trial run; generating, by the first device, a first packet that is used to request trial run, where the first packet carries the condition set; and sending, by the first device, the first packet to the second device.

In a manner in which the packet that is sent by the first device to the second device and that is used to request trial run carries the condition set used to indicate the second device to exit trial run, the second device can automatically determine, in a process of performing trial run, whether the condition set is met, and automatically exit trial run when the condition set is met. This reduces a problem that in the trial run process of the second device, operation and maintenance personnel need to repeatedly confirm whether the second device needs to exit trial run, and a processing process is relatively complex.

In a possible manner, the condition includes a parameter and a value range of the parameter; or the condition includes notification information, and the notification information includes alarm information or event information.

In a possible manner, the condition set includes a condition used to indicate a command of an action and a condition used to indicate an execution result of the action.

In a possible manner, when the at least one condition includes a first condition and a second condition, the condition set further includes a logical relationship between the first condition and the second condition, and the logical relationship is AND or OR.

In the foregoing optional manner, as many condition types and conditions as possible are defined, so that the condition set in the packet that is used to request trial run can fully support various cases of exiting trial run, and automatic exit from trial run becomes simple and efficient.

In a possible manner, the first packet is a network configuration protocol NETCONF packet, a remote login network protocol Telnet packet, or a secure shell SSH protocol packet.

By supporting a plurality of network protocols, the operation and maintenance personnel may use the same method to resolve a problem of a complex operation of exiting trial run.

In a possible manner, before the obtaining, by the first device running the network protocol client, a condition set, the method further includes: receiving, by the first device, a capability identifier sent by the second device, where the capability identifier is used to identify that the second device supports automatic exit from trial run.

In this way, the first device may learn, by receiving the capability identifier sent by the second device, that the second device supports automatic exit from trial run, and then send the packet that is used to request trial run and that carries the condition set to the second device. This makes the processing process simple. This avoids a problem that the first device sends, to the second device, the packet that is used to request trial run and that carries the condition set, but actually the second device does not support automatic exit from trial run, cannot process or report an error, and an operation is complex.

In a possible manner, the first device receives a second packet sent by the second device, where the second packet is used to notify that the second device has exited trial run.

In this way, the first device receives the packet that is sent by the second device and that is used to notify that the second device has exited trial run, so that the operation and maintenance personnel can learn, by using information provided in the packet, that a configuration error may exist in a candidate configuration on the device, and further modify the configuration, to reduce impact caused by the candidate configuration error.

According to a second aspect, a method for automatically exiting trial run is provided. The method is applied to a second device, and the second device runs a network protocol server. The method includes: receiving, by the second device running the network protocol server, a first packet sent by a first device running a network protocol client, where the first packet is a packet that is used to request trial run, the first packet carries a condition set, the condition set includes at least one condition, and the at least one condition is a condition used to indicate the second device to exit trial run; and in a process in which the second device performs trial run, when the second device determines that the condition set is met, exiting, by the second device, trial run.

In a method in which the received packet that is sent by the first device and that is used to request trial run carries the condition set used to indicate the second device to exit trial run, the second device can automatically determine, in a process of performing trial run, whether the condition set is met, and automatically exit trial run when the condition set is met. This can reduce a problem that in the trial run process of the second device, operation and maintenance personnel need to repeatedly confirm whether the second device needs to exit trial run, and a processing process is relatively complex.

In a possible manner, the condition includes a parameter and a value range of the parameter; or the condition includes notification information, and the notification information includes alarm information or event information.

In a possible manner, the condition set includes a condition used to indicate a command of an action and a condition used to indicate an execution result of the action.

In a possible manner, when the at least one condition includes a first condition and a second condition, the condition set further includes a logical relationship between the first condition and the second condition, and the logical relationship is AND or OR.

In the foregoing optional manner, as many condition types and conditions as possible are defined, so that the condition set in the packet that is used to request trial run can fully support various cases of exiting trial run, and automatic exit from trial run becomes simple and efficient.

In a possible manner, the first packet is a network configuration protocol NETCONF packet, a remote login network protocol Telnet packet, or a secure shell SSH protocol packet.

By supporting a plurality of network protocols, the operation and maintenance personnel may use the same method to resolve a problem of a complex operation of exiting trial run.

In a possible manner, before the receiving, by the second device running the network protocol server, a first packet sent by a first device running a network protocol client, the method further includes: sending, by the second device, a capability identifier to the first device, where the capability identifier is used to identify that the second device supports automatic exit from trial run.

In this way, the second device may notify, by sending the capability identifier to the first device, the first device that the second device supports automatic exit from trial run. Then, the first device may send the packet that is used to request trial run and that carries the condition set to the second device. This makes the processing process simple. This avoids a problem that the first device sends, to the second device, the packet that is used to request trial run and that carries the condition set, but actually the second device does not support automatic exit from trial run, cannot process or report an error, and an operation is complex.

In a possible manner, after the exiting, by the second device, trial run, the method further includes: sending, by the second device, a second packet to the first device, where the second packet is used to notify that the server device has exited trial run.

In this way, the second device sends, to the first device, the packet used to notify that the second device has exited trial run, so that the operation and maintenance personnel can learn, by using information provided in the packet, that a configuration error may exist in a candidate configuration on the device, and further modify the configuration, to reduce impact caused by the candidate configuration error.

According to a third aspect, a first device is provided. The first device runs a network protocol client, and the first device includes: an obtaining unit, configured to obtain a condition set, where the condition set includes at least one condition, and the at least one condition is a condition used to indicate a second device running a network protocol server to exit trial run;
a generation unit, configured to generate a first packet that is used to request trial run, where the first packet carries the condition set; and a sending unit, configured to send the first packet to the second device.

In a possible manner, the condition includes a parameter and a value range of the parameter; or the condition includes notification information, and the notification information includes alarm information or event information.

In a possible manner, the condition set includes a condition used to indicate a command of an action and a condition used to indicate an execution result of the action.

In a possible manner, the first packet is a network configuration protocol NETCONF packet, a remote login network protocol Telnet packet, or a secure shell SSH protocol packet.

In a possible manner, the first device further includes a first receiving unit, configured to receive a capability identifier sent by the second device, where the capability identifier is used to identify that the second device supports automatic exit from trial run.

In a possible manner, the first device further includes a second receiving unit, configured to receive a second packet sent by the second device, where the second packet is used to notify that the second device has exited trial run.

According to a fourth aspect, a second device is provided. The second device runs a network protocol server, and the second device includes: a receiving unit, configured to receive a first packet sent by a first device running a network protocol client, where the first packet is a packet that is used to request trial run, the first packet carries a condition set, the condition set includes at least one condition, and the at least one condition is a condition used to indicate the second device to exit trial run; and a processing unit, configured to: in a trial run process, exit trial run when it is determined that the condition set is met.

In a possible manner, the condition includes a parameter and a value range of the parameter; or the condition includes notification information, and the notification information includes alarm information or event information.

In a possible manner, the condition set includes a condition used to indicate a command of an action and a condition used to indicate an execution result of the action.

In a possible manner, the first packet is a network configuration protocol NETCONF packet, a remote login network protocol Telnet packet, or a secure shell SSH protocol packet.

In a possible manner, the second device further includes a first sending unit, configured to send a capability identifier to the first device, where the capability identifier is used to identify that the second device supports automatic exit from trial run.

In a possible manner, the second device further includes a second sending unit, configured to send a second packet to the first device, where the second packet is used to notify that the server device has exited trial run.

According to a fifth aspect, a first device is provided. The first device runs a network protocol client, and the first device includes a processor, a memory, and a communications interface. The memory stores at least one instruction, and the processor is configured to load the instruction, so that the first device performs the method for automatically exiting trial run according to any one of the first aspect and the optional manners of the first aspect.

According to a sixth aspect, a second device is provided. The second device runs a network protocol server, and the second device includes a processor, a memory, and a communications interface. The memory stores at least one instruction, and the processor is configured to load the instruction, so that the second device performs the method for automatically exiting trial run according to the second aspect or the optional manners of the second aspect.

According to a seventh aspect, a network system is provided. The network system includes a first device running a network protocol client and a second device running a network protocol server. The first device is the first device according to any one of the third aspect and the fifth aspect, and the second device is the second device according to any one of the fourth aspect and the sixth aspect.

According to a seventh aspect, a computer-readable storage medium is provided. The storage medium stores at least one instruction, and the instruction is used for loading by a processor, so that the processor performs the obtaining step according to the first aspect, and controls a communications interface to perform the receiving step and the sending step in the method for automatically exiting trial run according to any one of the first aspect and the optional manners of the first aspect; or
the instruction is used for loading by a processor, so that the processor performs the trial run performing step and the determining step according to any one of the second aspect or the optional manners of the second aspect, and controls a communications interface to perform the receiving step and the sending step in the method for automatically exiting trial run according to any one of the second aspect or the optional manners of the second aspect.

### BRIEF DESCRIPTION OF DRAWINGS

To describe technical solutions of the present invention more clearly, the following briefly describes accompanying drawings used in embodiments. Apparently, the following accompanying drawings are merely accompanying drawings of some embodiments of the present invention, and a person of ordinary skill in the art may derive other technical solutions and accompanying drawings from these accompanying drawings without creative efforts. These technical solutions and accompanying drawings shall also be considered as falling within the scope of the present invention.
FIG. 1 is a diagram of a scenario of a communications system according to an embodiment of this application;
FIG. 2 is a flowchart of a method for automatically exiting trial run according to an embodiment of this application;
FIG. 3 is a schematic diagram of a first packet according to an embodiment of this application;
FIG. 4 is a schematic diagram of a first packet according to an embodiment of this application;
FIG. 5 is a schematic diagram of a first packet according to an embodiment of this application;
FIG. 6 is a schematic diagram of a first packet;
FIG. 7 is a schematic structural diagram of a first device according to an embodiment of this application;
FIG. 8 is a schematic structural diagram of a second device according to an embodiment of this application;
FIG. 9 is a schematic structural diagram of a first device according to an embodiment of this application; and
FIG. 10 is a schematic structural diagram of a second device according to an embodiment of this application.

### DESCRIPTION OF EMBODIMENTS

In order to enable a person skilled in the art to better understand solutions of the present invention, the following describes embodiments of the present invention in more detail with reference to accompanying drawings and implementations.

In the embodiments of this application, terms such as "first" and "second" are used to distinguish same items or similar items that have basically same functions. It should be understood that there is no logical or time sequence dependency between "first" and "second", and a quantity and an execution sequence are not limited. A condition set in the embodiments of this application may include one or more conditions. This is not specifically limited in this application.

The following describes terms in the embodiments of this application.

A NETCONF is a network management protocol officially published by the internet engineering task force (IETF) NETCONF working group in 2006 and is defined in the IETF request for comments (request for comments, RFC) 6241. A device running a NETCONF server may support three configuration storage (datastore) modes: a running configuration (running configuration datastore) that is a configuration when a device in an active state is running, a startup configuration (startup configuration datastore) that is a configuration for next startup of a system, and a candidate configuration (candidate configuration datastore) that is a configuration that does not take effect. A commit (commit) command may be used to apply the candidate configuration to the device, so that the candidate configuration becomes a current running configuration.

A command interpreter interface (command line interface, CLI) is a common tool used by operation and maintenance personnel to interact with a network device. A working principle of the command line interface is as follows: The command line interface parses an instruction input in the command line interface to manage the network device. When the CLI is used to manage the device, the network device may be remotely logged in by using a Telnet client or an SSH client. In a possible scenario, the CLI of the network device supports trial run, and a trial run mechanism of the CLI is similar to that of a NETCONF mechanism. Details are not described herein in the embodiments of this application.

In the embodiments of this application, a method for automatically exiting trial run of a CLI command line carried by the Telnet/SSH is similar to a method for automatically exiting trial run of the NETCONF. In the embodiments of this application, the NETCONF is used as an example for description.

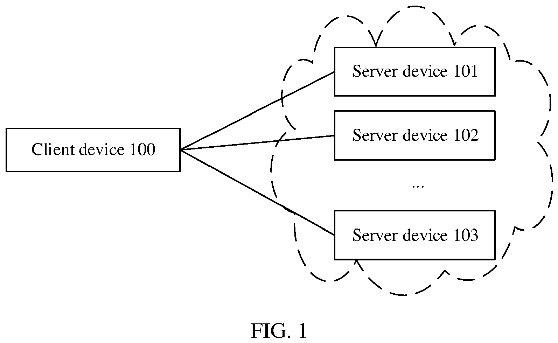

FIG. 1 is a diagram of a scenario of a communications system. The scenario includes one or more first devices running a network protocol client and at least one second device running a network protocol server. In this embodiment of this application, the first device running the network protocol client is referred to as a client device, and the second device running the network protocol server is referred to as a server device.

As shown in FIG. 1, a client device 100 manages at least one server device, for example, at least one of a server device 101, a server device 102, and a server device 103 in FIG. 1. The client device 100 is a device on which a NETCONF client, a Telnet client, or an STelnet client is deployed, and may be, for example, a mobile phone, a personal computer (PC), a tablet PC, a notebook computer, an ultra-mobile personal computer, a personal digital assistant, or a server. The server device is a device on which a NETCONF server, a Telnet server, or an SSH server is deployed. Any server device in the scenario shown in FIG. 1 may be a network device of a type, for example, an internet protocol (IP) network device, a wavelength division multiplexing (WDM) network device, or an optical transport network (OTN) network device, or may be a device, for example, a server. This is not specifically limited in this embodiment of this application.

An embodiment of this application provides a method for automatically exiting trial run. A packet that is used to request trial run and that is sent by a client device includes a condition set. In a process of performing trial run, a server device determines, based on the condition set included in the packet that is used to request trial run, whether to exit trial run. When the server device determines that the condition set is met, the server device automatically exits trial run, and operation and maintenance personnel do not need to repeatedly deliver a command. A processing process is simple, and impact on the server device and a network in which the server device is located can be reduced.

The following describes the method provided in this embodiment of this application with reference to the scenario shown in FIG. 1.

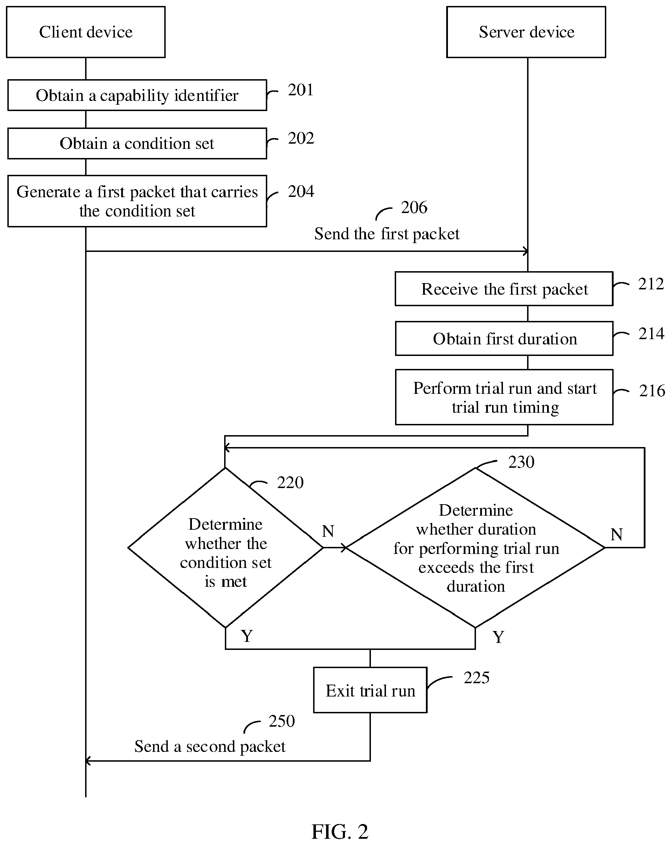

FIG. 2 is a flowchart of a method for automatically exiting trial run according to an embodiment of this application. As shown in FIG. 2, the method may include the following steps.

Step 201: A client device obtains a capability identifier.

For example, manners in which the client device obtains the capability identifier may be as follows: Manner 1: The client device obtains the capability identifier in a static configuration manner. Manner 2: The client device receives the capability identifier sent by a server device. That the client device receives the capability identifier sent by a server device includes: sending, by the server device, a capability advertisement packet to the client device, where the capability advertisement packet includes the capability identifier. The capability identifier is used to indicate that the server device supports automatic exit from trial run.

For example, the server device predefines a capability (capability) of automatically exiting trial run. The capability is an optional NETCONF feature and is presented by the server device that supports the feature. For related content of introduction and definition of the capability, refer to section 9.3 in the RFC 8040 or the method for defining the capability provided in RFC 6243. Details are not described herein. In an example, the defined capability of automatically exiting trial run is:
<capability>http://www.abc.com/netconf/capability/confirmed-commit:2.0 </capability>, where capability indicates a capability, an identifier of the capability is confirmed-commit:2.0, and http://www.abc.com/netconf/capability indicates a location of the capability.

Step 202: The client device obtains a condition set.

The condition set includes at least one condition, and the at least one condition is used to indicate the server device to exit trial run. The client device may obtain the condition set in the following several manners. In an implementation, the client device may obtain the condition set by using a parameter input by operation and maintenance personnel in a user interface of the client device. In another implementation, the client device receives the condition set sent by another control management device, for example, an operations support system (OSS).

In an implementation, any condition in the condition set includes at least one parameter and a value range of the parameter. The value range of the parameter may be equal to, greater than, or less than a value, or may be an interval range determined by using two boundary values, or may be pattern matching (like) with one or more values. For example, a like 'b*' indicates that a character of any length starting with b is included. This is not specifically limited in this application. When a condition includes a plurality of parameters, the condition further includes a logical relationship between the plurality of parameters. The logical relationship may be AND or OR.

When the logical relationship is AND, it indicates that the server device may exit trial run when values of all of the parameters in the condition are met. When the logical relationship is OR, it indicates that the server may exit trial run when a value of any parameter in the condition is met.

In another implementation, any condition in the condition set includes notification information, and the notification information includes alarm information or event information.

In still another implementation, any condition in the condition set includes a condition used to indicate a command of an action and a condition used to indicate an execution result of the action. The action indicates an operation that needs to be performed by the server device, for example, ping an IP address. The execution result of the action is exiting trial run when a result of pinging the IP address is that a packet loss rate is 100%.

For example, when the condition set includes a plurality of conditions, a logical relationship between the plurality of conditions in the condition set is OR, or a logical relationship between the plurality of conditions is AND. This is not specifically limited in this application. When the logical relationship is OR, it indicates that the server device exits trial run when any one of the plurality of conditions is met. When the logical relationship is AND, it indicates that the server device exits trial run when each of the plurality of conditions is met.

Step 204: The client device generates a first packet that is used to request trial run, where the first packet includes the condition set.

For example, the first packet is a NETCONF request (RPC) packet, a Telnet packet, or an SSH packet.

In an example of the NETCONF packet, a parameter of a condition set may be defined as a condition set (cancel-condition) of exiting trial run, a type of cancel-condition may be a container (container) type, and the condition set may include a list (list). The list may include one or more conditions (condition), and each condition may contain the following three attributes. 1. A number (ID) indicating a sequence number of a condition in the condition set. 2. A type (type) indicating a type of the condition, for example, a value (data) type, an action (action) type, or a notification (notification) type. A condition of the data type refers to that the condition carries a parameter and a value range of the parameter, and a condition of the action type refers to that the condition carries a command used to indicate an action. When the condition set includes the condition of the action type, the condition set further includes a condition used to indicate an execution result of the action. The condition used to indicate the execution result of the action may also be expressed by using the data type. A condition of the notification type refers to that the condition carries notification information. 3. Condition content that is a specific condition requirement. Optionally, the list may further include a logical relationship (condition-logic). For a NETCONF packet parameter definition method, refer to the request for comments (request for comments), a parameter definition method in RFC 6241, and an example of a parameter definition provided in RFC 6243. Details are not described in this application.

In an example of a CLI command line carried in a Telnet or an SSH, a condition set (quitcondition) command for exiting trial run may be defined for the CLI command line. Similar to the foregoing example of the NETCONF, quitcondition may also include a plurality of conditions, and each condition may include a plurality of types and specific condition expressions. Details are not described herein in this application.

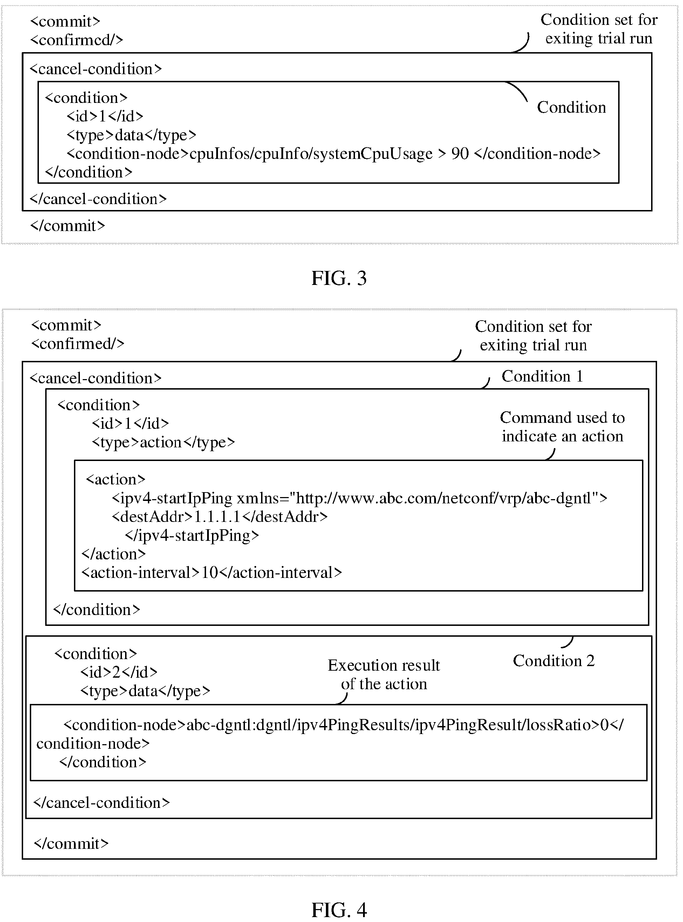

In an example, when the first packet is a NETCONF packet, content of the first packet may be specifically shown in FIG. 3. "<commit> and <confirmed/>" indicate that the first packet is a packet that is used to request trial run, and the condition set of exiting trial run includes one condition. An identifier (ID) value is 1, it indicates that the condition is the first condition in the condition set. A type (type) value is data (data), it indicates that the condition is a condition that includes a parameter and a value range of the parameter. A condition node (condition-node) describes a specific condition requirement, for example, a specific condition in this example indicates that when a value of utilization of a central processing unit (CPU) is greater than 90%, trial run is exited.

In an example of a NETCONF packet shown in FIG. 4, a condition set includes two conditions. A condition 1 is a condition that includes a command used to indicate an action, and a specific expression of the condition 1 indicates the server device to perform a packet internet groper (PING) operation on a device whose IP address is 1.1.1.1 every 10 seconds. A condition 2 is a condition used to indicate an execution result of the action, and the condition may be expressed by a parameter and a value range of the parameter. Specific content of the condition 2 is: a packet loss rate returned by the PING operation is greater than 0. In this example, a relationship between the two conditions in the condition set is AND by default, and the condition set indicates that trial run is exited if a reply of pinging the device whose IP address is 1.1.1.1 is not received.

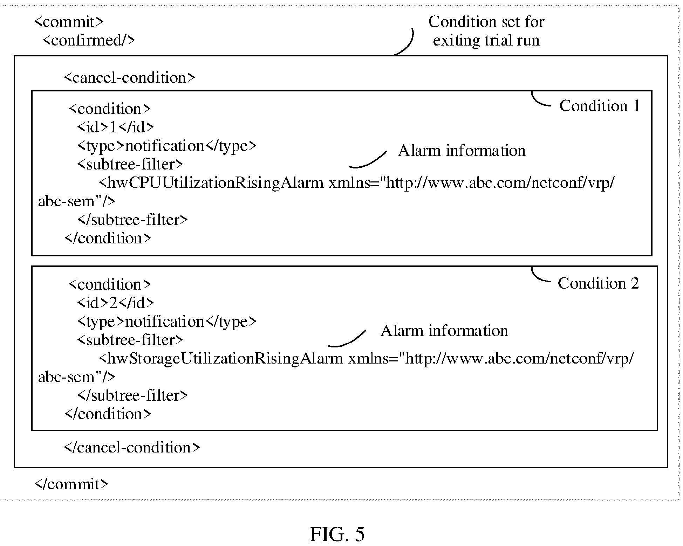

In an example of a first packet shown in FIG. 5, with reference to the foregoing example, it may be understood that the condition set carried in the first packet includes two conditions. Both the two conditions are of the notification (notification) type, indicating that the two conditions are conditions that carry notification information. A condition 1 indicates that trial run is exited when one piece of CPU utilization alarm information is received, and a condition 2 indicates that trial run is exited when one piece of memory utilization alarm information is received. In this example, a default logical relationship between different conditions is "OR", to be specific, trial run is exited when any one of the conditions is met.

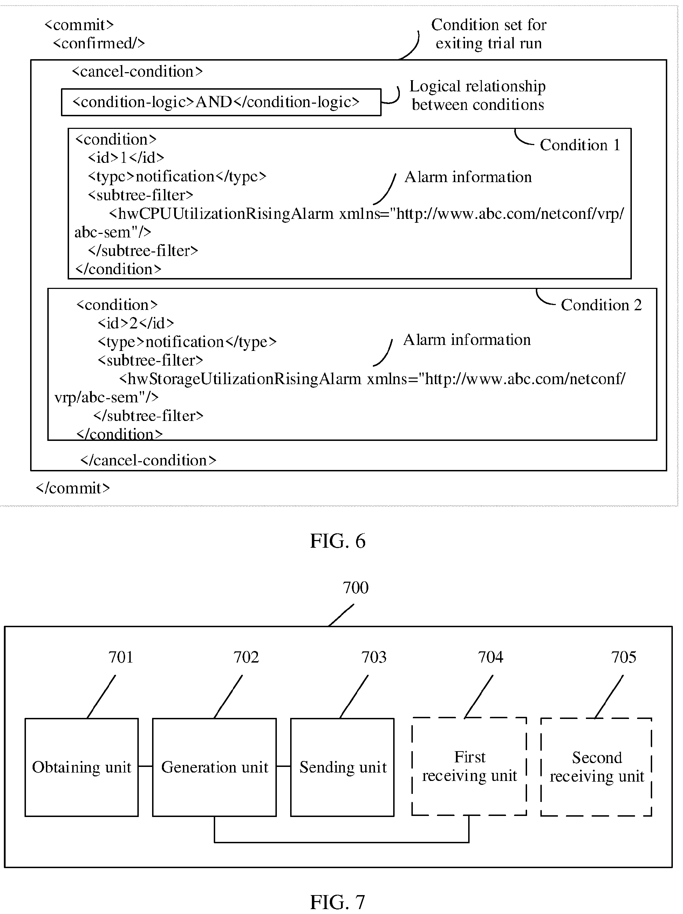

In an example of a first packet shown in FIG. 6, when a condition set includes a plurality of conditions, the condition set carried in the first packet further includes a logical relationship between the conditions. In this example, the logical relationship is AND.

For example, an expression format of the condition set is a Python format, an extensible markup path language (XPath) format, or another expression format. This is not specifically limited in this application.

Step 206: The client device sends the first packet to the server device.

Step 212: The server device receives the first packet sent by the client device.

Step 214: The server device obtains first duration, where the first duration indicates duration for performing trial run by the server device.

For example, manners in which the server device obtains the first duration include: Manner 1: The first packet received by the server device further includes the first duration. Manner 2: The server device obtains the first duration in the static configuration manner. When the server device obtains the first duration in Manner 2, step 214 may be performed before step 212.

In an implementation, in an example of a NETCONF packet, the first duration carried in the first packet may be: <confirm-timeout>3000</confirm-timeout>, it indicates that the first duration is 3000 seconds. In an example of a CLI command line carried in a Telnet or an SSH, the first duration carried in the first packet may be commit trial <900>, indicating that the first duration is 900 seconds. In another implementation, the first duration obtained by the server device in the static configuration manner may be 600 seconds.

Step 216: The server device performs trial run.

For example, after receiving the first packet, the server device starts to trial run, and starts trial run timing.

Step 220: The server device determines whether the condition set is met. When the condition set is met, step 225 is performed. When the condition set is not met, step 230 is performed.

For example, when the condition in the condition set includes the parameter and the value range of the parameter, the server device determines, based on the parameter in the condition set, a specific value of the parameter on the server device, and determines whether a requirement of the value range is met. In an example, the first packet received by the server device is shown in FIG. 3, and the server device determines a value of a corresponding data node based on a condition set: system CPU utilization is greater than 90%, and if the value is greater than 90%, exits trial run.

For example, when the condition in the condition set includes the command used to indicate the action, the server device executes the command used to indicate the action. In an example, the first packet received by the server device is shown in FIG. 4, and the condition set in the first packet includes two conditions: a condition 1. A PING operation is performed on a device whose destination IP address is 1.1.1.1 every 10 seconds; and a condition 2: It is determined that a packet loss rate returned by the PING operation is greater than 0. In this example, there are a plurality of conditions, and the default logical relationship between the conditions is AND. The server device exits trial run when performing the PING operation and the packet loss rate returned by the PING operation is greater than 0.

For example, when the condition in the condition set includes the notification information, the server device determines whether a notification message indicated by the notification information is received. In an example, the first packet received by the server device is shown in FIG. 5, and the condition set includes two conditions that carry notification information: a condition 1. When the server device triggers a CPU utilization alarm; and a condition 2. When the server device triggers a memory utilization alarm. In this example, there are a plurality of conditions, and the default logical relationship between the conditions is AND. The server device determines, based on the condition, whether a corresponding notification message is received, and exits trial run when the server device triggers either of the two alarms.

For example, when the condition set includes the plurality of conditions and the condition set further includes the logical relationship between the plurality of conditions, the server device determines whether the condition set includes the plurality of conditions is met, and exits trial run when determining, based on the logical relationship, that the condition set is met. In an example, the first packet received by the server device is shown in FIG. 6. Because the conditions in the condition set in FIG. 6 are the same as those in FIG. 5, details are not described herein.

In addition, the condition set further defines the logical relationship between the plurality of conditions, and the logical relationship is AND. In this case, the two alarms need be triggered simultaneously to exit trial run.

Step 225: The server device exits trial run.

Step 230: The server device determines whether duration for performing trial run is greater than the first duration. If the duration for performing trial run is greater than the first duration, step 225 is performed. If the duration for performing trial run is less than or equal to the first duration, step 220 is performed.

For example, the server device determines, based on the duration for performing trial run obtained based on the trial run timing, a relationship between the duration for performing trial run and the first duration, to perform subsequent processing.

Step 250: The server device sends a second packet to the client device.

The second packet is a notification packet used to indicate a trial run result. After the server device exits trial run, the server device sends the notification packet to the client device, where the notification packet indicates that the server device has exited trial run.

To enable the server device to send the notification packet to the client device after exiting trial run, before step 250, the method provided in the embodiment of this application further includes: sending, by the client device, a first instruction to the server device, where the first instruction is used to indicate the server device to send the trial run result to the client device. This manner helps reduce communication overheads between the client device and the server device, and saves performance of the server device.

For example, when a network protocol is the NETCONF, the client device may further send a subscription packet to the server device, where the subscription packet includes the first instruction. The subscription packet is used to initiate a subscription to an event notification. After the subscription, the server device sends a notification to an initiator of the subscription packet. For details about the subscription packet, refer to section 2.1.1 in RFC 5277. In this embodiment of this application, the subscription packet is used to indicate to subscribe to a new event stream on the server device. The new event stream is used to obtain a processing status of the first packet, and send the processing status of the first packet to the client device in a form of a notification. The processing status of the first packet is the trial run result.

Optionally, during trial run performed by the server device, after the server device performs step 230, the server device may further receive a trial run commit instruction sent by the client device. After receiving the instruction, the server device commits a candidate configuration for trial run as a running configuration, where the candidate configuration includes a series of parameters and a set of values of the parameters.

The trial run commit instruction received by the server device is carried in the RPC packet sent by the client device, and the instruction may be commit (commit).

FIG. 7 shows a first device 700 according to an embodiment of this application. The first device 700 runs a network protocol client. The first device 700 may be the client device in the method provided in the embodiment of this application. The first device 700 includes an obtaining unit 701, a generation unit 702, and a sending unit 703.

Optionally, the first device 700 further includes a first receiving unit 704 and a second receiving unit 705. The obtaining unit 701 is configured to perform step 201, step 202, and a related optional manner in the method embodiment shown in FIG. 2. The generation unit 702 is configured to perform step 204 and a related optional manner in the method embodiment shown in FIG. 2. The sending unit 703 is configured to perform step 206 and a related optional manner in the method embodiment shown in FIG. 2. The first receiving unit 704 is configured to perform Manner 2 in step 201 in the method embodiment shown in FIG. 2, that is, receive the capability identifier sent by the server device, and perform a related optional manner. The second receiving unit 705 is configured to receive the second packet sent by the server device shown in FIG. 2 and perform a related optional manner.

It should be noted that, the first device provided in the embodiment corresponding to FIG. 7 is described by using only division into the foregoing functional units as an example. In actual application, the foregoing functions may be allocated to and implemented by different functional units based on a requirement, to be specific, an internal structure of the first device is divided into different functional units, or a same functional unit is used to complete all or some of the foregoing functions. For example, the first receiving unit and the second receiving unit may be a same receiving unit. In addition, for a specific implementation process of the first device provided in the foregoing embodiment, refer to the method embodiment. Details are not described herein.

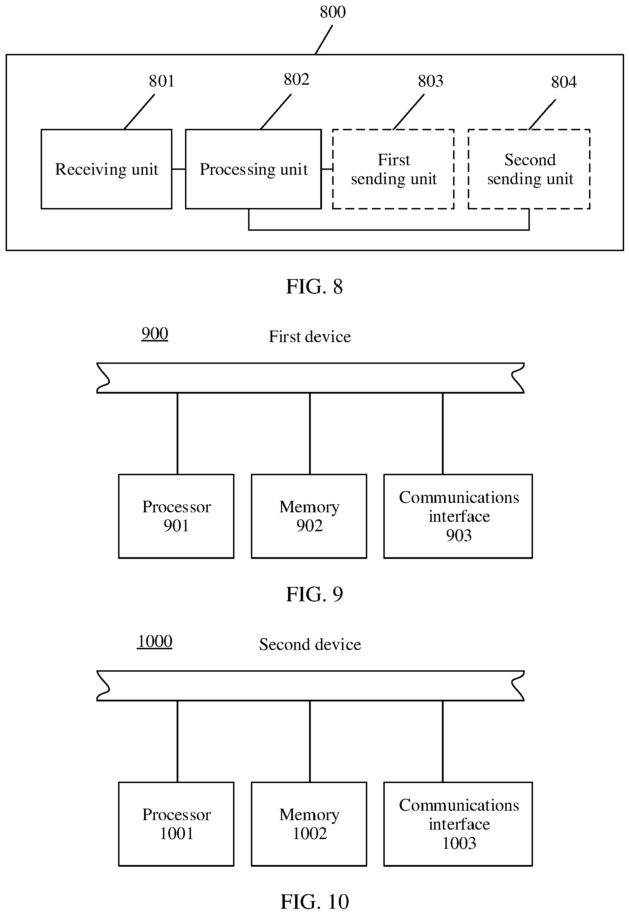

FIG. 8 shows a second device 800 according to an embodiment of this application. The second device 800 runs a network protocol server. The second device 800 may be the server device in the method provided in the embodiment of this application. The second device 800 includes a receiving unit 801 and a processing unit 802. Optionally, the second device 800 may further include a first sending unit 803 and a second sending unit 804. The receiving unit 801 is configured to perform step 212 and a related optional manner in the method embodiment shown in FIG. 2. The processing unit 802 is configured to perform step 216, step 220, step 225, step 230, and a related optional manner. The first sending unit 803 is configured to perform an optional manner of sending the capability identifier to the client device in the method embodiment shown in FIG. 2. The second sending unit 804 is configured to perform step 250 and a related optional manner in the method embodiment shown in FIG. 2.

It should be noted that, the second device provided in the embodiment corresponding to FIG. 8 is described by using only division into the foregoing functional units as an example. In actual application, the foregoing functions may be allocated to and implemented by different functional units based on a requirement, to be specific, an internal structure of the second device is divided into different functional units, to complete all or some of the foregoing functions. In addition, for a specific implementation process of the second device provided in the foregoing embodiment, refer to the method embodiment. Details are not described herein.

The foregoing describes the first device and the second device in the embodiments of this application. The following describes possible product forms of the first device and the second device. It should be understood that any product in any form that has the feature of the first device in FIG. 7 and any product in any form that has the feature of the second device in FIG. 8 fall within the protection scope of this application. It should be further understood that the following description is merely an example, and does not limit product forms of the first device and the second device in the embodiments of this application.

In a possible product form, the first device or the second device provided in the embodiment of this application may be implemented by using a general bus architecture.

As shown in FIG. 9, an embodiment of this application provides a first device 900. The first device 900 may be the client device in the method provided in the embodiment of this application. The first device 900 includes a processor 901, a memory 902, and a communications interface 903. The memory 902 stores at least one instruction. The processor 901 is configured to load the instruction to perform step 201, step 202, step 204, and a related optional manner in the foregoing method for automatically exiting trial run, and control the communications interface 903 to perform step 206 and a related optional manner in the foregoing method for automatically exiting trial run. The processor 901, the memory 902, and the communications interface 903 may be connected by using a bus.

The processor 901 may be a central processing unit (CPU), an application-specific integrated circuit (ASIC), or one or more integrated circuits configured to control program execution of solutions of this application.

The memory 902 may be a read-only memory (ROM) or another type of static storage device that can store static information and an instruction, or a random access memory (RAM) or another type of dynamic storage device that can store information and an instruction, or may be an electrically erasable programmable read-only memory (EEPROM), a compact disc read-only memory (CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto.

As shown in FIG. 10, an embodiment of this application provides a second device 1000. The second device 1000 may be the server device in the method provided in the embodiment of this application. The second device 1000 includes a processor 1001, a memory 1002, and a communications interface 1003. The memory 1002 stores at least one instruction. The processor 1001 is configured to load the instruction to perform step 214, step 216, step 220, step 230, step 225, and a related optional manner in the foregoing method for automatically exiting trial run, and control the communications interface 1003 to perform step 212, step 250, and a related optional manner in the foregoing method for automatically exiting trial run. The processor 1001, the memory 1002, and the communications interface 1003 may be connected by using a bus. A product form of the processor 1001 is similar to that of the processor 901, and a product form of the memory 1002 is similar to that of the memory 902. Details are not described herein.

In a possible product form, the first device or the second device provided in this embodiment of this application may be implemented by a general-purpose processor.

The general-purpose processor for implementing the first device includes a processing circuit, and an output interface and an input interface that are internally connected and communicate with the processing circuit. The processing circuit is configured to perform step 201, step 202, step 204, and a related optional manner, and the processing circuit is further configured to control the output interface to perform step 206. The general-purpose processor further includes a storage medium, and the storage medium is configured to store an instruction executed by the processing circuit.

The general-purpose processor for implementing the second device includes a processing circuit, and an input interface and an output interface that are internally connected to and communicate with the processing circuit. The processing circuit is configured to perform step 214, step 216, step 220, step 230, step 225, and a related optional manner. The processing circuit is further configured to control the input interface to perform step 212 and a related optional manner, and the processing circuit is further configured to control the output interface to perform step 250 and a related optional manner. Optionally, the general-purpose processor may further include a storage medium, and the storage medium is configured to store an instruction executed by the processing circuit.

In a possible product form, the first device or the second device provided in this embodiment of this application may be further implemented by using the following: one or more field-programmable gate arrays (FPGA), a programmable logic device (PLD), a controller, a state machine, gate logic, a discrete hardware component, any other suitable circuit, or any combination of circuits that can perform various functions described in this application.

A person of ordinary skill in the art may be aware that, method steps and units described in the embodiments disclosed in this specification may be implemented by electronic hardware, computer software, or a combination thereof. To clearly describe interchangeability between the hardware and the software, the foregoing has generally described steps and compositions of each embodiment according to functions.

Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiment, and details are not described herein.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, the direct couplings, or the communication connections may be implemented through some interfaces, and indirect couplings or communication connections between the apparatuses or the units may be connections in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a computer software product. The computer software product is stored in a storage medium and includes several instructions for indicating a computer device (which may be a personal computer, a server, or a network device) to perform all or some of the steps of the method described in the embodiments of this application. The foregoing storage medium includes any medium that can store program code, for example, a USB flash drive, a removable hard disk, a read-only memory (ROM), a random access memory (RAM), a magnetic disk, or an optical disc.

All or some of the foregoing embodiments may be implemented by using software, hardware, firmware, or any combination thereof. When software is used to implement the embodiments, the embodiments may be implemented partially in a form of a computer program product. The computer program product includes one or more computer program instructions. When the computer program instructions are loaded and executed on the computer, the procedures or the functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (DVD), a semiconductor medium (for example, a solid-state drive), or the like.

The objectives, the technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A method for automatically exiting trial run, comprising:
obtaining, by a first device running a network protocol client, a condition set, wherein the condition set comprises at least one condition, and the at least one condition is a condition used to indicate a second device running a network protocol server to exit trial run;
generating, by the first device, a first packet that is used to request trial run, wherein the first packet carries the condition set; and
sending, by the first device, the first packet to the second device.

2. The method according to claim 1, wherein
the condition comprises a parameter and a value range of the parameter; or
the condition comprises notification information, and the notification information comprises alarm information or event information.

3. The method according to claim 1 or 2, wherein
the condition set comprises a condition used to indicate a command of an action and a condition used to indicate an execution result of the action.

4. The method according to any one of claims 1 to 3, wherein the first packet is a network configuration protocol, NETCONF packet, a remote login network protocol, Telnet packet, or a secure shell, SSH protocol packet.

5. The method according to any one of claims 1 to 4, wherein before the obtaining, by a first device running a network protocol client, a condition set, the method further comprises:
receiving, by the first device, a capability identifier sent by the second device, wherein the capability identifier is used to identify that the second device supports automatic exit from trial run.

6. The method according to any one of claims 1 to 5, wherein the method further comprises:
receiving, by the first device, a second packet sent by the second device, wherein the second packet is used to notify that the second device has exited trial run.

7. A method for automatically exiting trial run, comprising:
receiving, by a second device running a network protocol server, a first packet sent by a first device running a network protocol client, wherein the first packet is a packet that is used to request trial run, the first packet carries a condition set, the condition set comprises at least one condition, and the at least one condition is a condition used to indicate the second device to exit trial run; and
in a process in which the second device performs trial run, when the second device determines that the condition set is met, exiting, by the second device, trial run.

8. The method according to claim 7, wherein
the condition comprises a parameter and a value range of the parameter; or
the condition comprises notification information, and the notification information comprises alarm information or event information.

9. The method according to claim 7 or 8, wherein
the condition set comprises a condition used to indicate a command of an action and a condition used to indicate an execution result of the action.

10. The method according to any one of claims 7 to 9, wherein before the receiving, by a second device running a network protocol server, a first packet sent by a first device running a network protocol client, the method further comprises:
sending, by the second device, a capability identifier to the first device, wherein the capability identifier is used to identify that the second device supports automatic exit from trial run.

11. The method according to any one of claims 7 to 10, wherein after the exiting, by the second device, trial run, the method further comprises:
sending, by the second device, a second packet to the first device, wherein the second packet is used to notify that the second device has exited trial run.

12. A device, wherein runs a network protocol client, comprising:
a processor, a memory, and a communications interface, the memory stores at least one instruction, and the processor is configured to load the instruction, so that the first device performs the method for automatically exiting trial run according to any one of claims 1 to 6.

13. A device, wherein runs a network protocol server, comprising:
a processor, a memory, and a communications interface, the memory stores at least one instruction, and the processor is configured to load the instruction, so that the first device performs the method for automatically exiting trial run according to any one of claims 7 to 10.

14. A network system, wherein the network system comprises a first device running a network protocol client and a second device running a network protocol server, the first device is the device according to claim 12, and the second device is the device according to claim 13.
